# EUROPEAN PATENT APPLICATION

(11) **EP 3 069 852 A1**
(43) Date of publication of application: **21.09.2016**
(21) Application number: 16160551.4
(22) Date of filing: 16.03.2016
(51) Int. Cl.: B29C 65/02, B32B 37/00, B32B 37/12, B29C 65/06, B29C 65/08, B29C 65/14, B29C 65/16, B29L 31/30, B29C 65/36, B29C 65/04, B29C 65/82

(54) **RESIN JOINED BODY, METHOD OF PRODUCING RESIN JOINED BODY, AND VEHICULAR STRUCTURAL BODY**

(30) Priority: 19.03.2015 JP 2015056373
(71) Applicant: Toyota Jidosha Kabushiki Kaisha, Toyota-shi, Aichi-ken 471-8571 (JP)
(72) Inventor: IWANO, Yoshihiro, TOYOTA-SHI, AICHI-KEN, 471-8571 (JP)
(74) Representative: Intès, Didier Gérard André

(57) **Abstract**

A resin joined body includes a thermoplastic resin containing fibers, and a thermosetting resin cured material containing fibers. The thermosetting resin cured material has a melting temperature lower than a melting temperature of the thermoplastic resin. The thermoplastic resin and the thermosetting resin cured material are joined together by welding.

## Description

### BACKGROUND OF THE INVENTION

### 1. Field of the Invention

The invention relates to a resin joined body, a method of producing a resin joined body, and a vehicular structural body.

### 2. Description of Related Art

The adoption of resin parts in vehicle bodies of next-generation vehicles is expected to increasingly expand. This creates an urgent need to establish a method of joining resin parts together.

An example of methods of joining fiber-reinforced thermoplastic resins together is described in Japanese Patent Application Publication No. 2014-076565 (JP 2014-076565 A). According to the method of JP 2014-076565 A, fiber-reinforced thermoplastic resins are joined together with a thermoplastic resin sheet disposed between the fiber-reinforced thermoplastic resins.

To join a resin part made of a thermosetting resin cured material and a resin part made of a thermoplastic resin together, an adhesive for bonding these resin parts together or a fastener, such as a rivet, for securing these resin parts to each other is usually employed.

A fiber-reinforced composite material plate containing a thermosetting resin and a thermoplastic resin is known (see, for example, Japanese Patent Application Publication No. 2008-230238 (JP 2008-230238 A)).

### SUMMARY OF THE INVENTION

The technique described in JP 2014-076565 A is, however, used to join thermoplastic resins having plasticity together, and therefore cannot be applied to the joining of a thermoplastic resin to a thermosetting resin cured material that has already been cured and is difficult to plasticize. Besides, the use of an adhesive or a fastener, such as a rivet, for joining a resin part made of a thermosetting resin cured material and a resin part made of a thermoplastic resin together is not desirable because the use of an adhesive or a fastener may result in a mass increase or a cost increase. In particular, if an adhesive is used to join a thermoplastic resin and a thermosetting resin cured material together, the strength of a joint (a place at which the thermoplastic resin and the thermosetting resin cured material are joined together) is determined by the strength of the adhesive, and therefore the material strength of a resin part itself cannot be fully utilized in some cases. Besides, the technique described in JP 2008-230238 A is applied to production of a fiber-reinforced composite material plate from a thermoplastic resin and a thermosetting resin that has yet to be cured, and therefore cannot be applied to the joining of a thermosetting resin cured material, in which a curing reaction has been completed, and a thermoplastic resin together.

The invention provides a resin joined body in which a thermoplastic resin and a thermosetting resin cured material are joined together without using an adhesive or a fastener, such as a rivet, a method of producing the resin joined body, and a vehicular structural body including the resin joined body.

A first aspect of the present disclosure relates to a resin joined body including a thermoplastic resin containing fibers, and a thermosetting resin cured material containing fibers. The thermosetting resin cured material has a melting temperature lower than the melting temperature of the thermoplastic resin. The thermoplastic resin and the thermosetting resin cured material are joined together by welding.

In the first aspect, the fibers contained in the thermosetting resin cured material may be in the form of woven fabric.

In the first aspect, the fibers contained in the thermoplastic resin may be in the form of non-woven fabric.

In the first aspect, the difference between the melting temperature of the thermoplastic resin and the melting temperature of the thermosetting resin cured material may be 50°C or more.

A second aspect of the present disclosure relates to a vehicular structural body including the resin joined body of the first aspect.

A third aspect of the present disclosure relates to a method of producing a resin joined body. The method includes joining a thermoplastic resin and a thermosetting resin cured material together by welding. The thermoplastic resin contains fibers, and the thermosetting resin cured material contains fibers. The thermosetting resin cured material has a melting temperature lower than the melting temperature of the thermoplastic resin.

In the third aspect, the welding may be vibration welding.

### BRIEF DESCRIPTION OF THE DRAWINGS

Features, advantages, and technical and industrial significance of exemplary embodiments of the present disclosure will be described below with reference to the accompanying drawings, in which like numerals denote like elements, and wherein:
FIG. 1 is an example of a photograph illustrating a sectional image of a joint in a resin joined body in an embodiment of the present disclosure; and
FIG. 2 is an enlarged photograph of a portion in FIG. 1 surrounded by an ellipse A and its vicinity.

### DETAILED DESCRIPTION OF EMBODIMENTS

Hereinafter, a resin joined body, a method of producing a resin joined body, and a vehicular structural body according to example embodiments of the present disclosure will be described in detail.

First, a resin joined body and a method of producing the resin joined body will be described. The resin joined body of the present embodiment is obtained by joining a thermoplastic resin and a thermosetting resin cured material together by welding. The thermoplastic resin contains fibers. The thermosetting resin cured material has a melting temperature lower than that of the thermoplastic resin, and contains fibers. In the resin joined body of the present embodiment, the thermoplastic resin containing fibers and the thermosetting resin cured material containing fibers are joined together by welding without using an adhesive or a fastener, such as a rivet. Thus, it is possible to prevent a mass increase that will occur due to the use of an adhesive or a fastener, such as a rivet, in joining the thermoplastic resin containing fibers and the thermosetting resin cured material containing fibers together. Besides, the strength of a joint (a place at which the thermoplastic resin and the thermosetting resin cured material are joined together) is not determined by the strength of an adhesive, and hence a joint strength of the resin joined body is enhanced by selecting appropriate resins. Furthermore, a range of use of the thermoplastic resin having good recycle property and high-cycle molding property is expanded.

The kind of thermoplastic resin used in the present embodiment is not limited to any particular kind, and various kinds of known thermoplastic resins may be used depending on the purpose of use. Examples of thermoplastic resin used in the present embodiment include a polycarbonate resin, a polyamide (PA) resin, a polyurethane (PU) resin, a polyvinyl chloride resin, an acrylonitrile-butadiene-styrene copolymer (ABS) resin, and a polypropylene (PP) resin. Among these, a PA resin and a PP resin are preferable.

The thermosetting resin cured material used in the present embodiment is a cured material obtained by thermally curing a thermosetting resin. The kind of thermosetting resin used to form the thermosetting resin cured material is not limited to any particular kind, and various kinds of known thermosetting resins may be used depending on the purpose of use. Examples of thermosetting resin used in the present embodiment include a vinyl ester resin, an unsaturated polyester resin, a phenol resin, an epoxy resin, and a urethane resin. Among these, an epoxy resin is preferable.

The kind of fibers used in the present embodiment is not limited to any particular kind, and various kinds of known fibers may be used depending on the purpose of use. Examples of the kind of fibers used in the present embodiment include resin fibers, such as aramid fibers, cellulose fibers, nylon fibers, vinylon fibers, polyester fibers, polyolefin fibers and rayon fibers; carbon fibers; glass fibers; and metal fibers. Among these, carbon fibers that can achieve a high mechanical strength are preferable.

A method of processing the thermoplastic resin with the fibers is not limited to any particular method, and various known methods may be employed depending on the purpose of use. Examples of the method include a method in which the fibers are impregnated with a solution or melt of the thermoplastic resin, then dried as needed, and molded into the form of a sheet, and a method in which the fibers and films of the thermoplastic resin are alternately stacked and then hot-pressed. A method of processing the thermosetting resin with the fibers is also not limited to any particular method, and various known methods may be employed depending on the purpose of use. The thermosetting resin may be processed with the fibers to form a prepreg.

The state of the fibers used in the present embodiment is not limited to any particular state, and the fibers in any known forms may be used depending on the purpose of use. Examples of the state of the fibers used in the present embodiment include the fibers in the form of woven fabric and the fibers in the form of non-woven fabric.

In the present embodiment, the content of the fibers in the thermoplastic resin is preferably comprised between 5% by mass and 50% by mass, and more preferably between 10% by mass and 50% by mass.

In the present embodiment, the content of the fibers in the thermosetting resin cured material is preferably comprised between 5% by mass and 50% by mass, and more preferably between 10% by mass and 50% by mass.

In the resin joined body of the present embodiment, the melting temperature of the thermosetting resin cured material is lower than the melting temperature of the thermoplastic resin. The difference between the melting temperature of the thermosetting resin cured material and the melting temperature of the thermoplastic resin is not limited to any particular value. However, the lower limit of the difference between the melting temperature of the thermosetting resin cured material and the melting temperature of the thermoplastic resin is, for example, preferably 50°C or more, more preferably 100°C or more, and further preferably 150°C or more. The upper limit of the difference between the melting temperature of the thermosetting resin cured material and the melting temperature of the thermoplastic resin is not limited to any particular value, but may be 250°C or less from the viewpoint of availability of the resins.

In the present embodiment, the melting temperatures of the thermosetting resin cured material and the thermoplastic resin signify values measured by differential scanning calorimetry (DSC) in accordance with JIS K7121-2012 (Testing methods for transition temperatures of plastics).

It is noted that the fibers contained in the thermosetting resin cured material are preferably in the form of woven fabric. When the woven fabric is used as the fibers contained in the thermosetting resin cured material, the fibers contained in the thermoplastic resin are easily entangled with the fibers constituting the woven fabric, and hence a higher joint strength is presumed to be easily achieved between the thermoplastic resin and the thermosetting resin cured material.

The fibers contained in the thermoplastic resin are preferably in the form of non-woven fabric. When non-woven fabric is used as the fibers contained in the thermoplastic resin, the fibers contained in the thermosetting resin cured material are easily entangled with the fibers contained in the thermoplastic resin, and hence a higher joint strength is presumed to be easily achieved between the thermoplastic resin and the thermosetting resin cured material.

Further, it is more preferable that the fibers contained in the thermosetting resin cured material are in the form of woven fabric and the fibers contained in the thermoplastic resin are in the form of non-woven fabric. The thermosetting resin cured material having a lower melting temperature than that of the thermoplastic resin disappears easily through melting or burning during the welding prior to the thermoplastic resin, and therefore the fibers contained in the thermosetting resin cured material are easily exposed. Because the non-woven fabric enters fiber meshes of the exposed woven fabric, the non-woven fabric is more easily entangled with the woven fabric. Thus, strong binding is easily achieved. As a result, a higher joint strength is presumed to be easily achieved between the thermoplastic resin and the thermosetting resin cured material.

The resin joined body of the present embodiment may be produced by a resin joined body producing method including a joining step of joining, by welding, a thermoplastic resin containing fibers to a thermosetting resin cured material having a melting temperature lower than the melting temperature of the thermoplastic resin and containing fibers.

In the present embodiment, because the melting temperature of the thermosetting resin cured material is lower than the melting temperature of the thermoplastic resin, the thermosetting resin cured material easily disappears by melting or burning prior to the thermoplastic resin, in joining these resins together by the welding in the joining step. Because the thermosetting resin cured material disappears by melting or burning prior to the thermoplastic resin, the fibers contained in the thermosetting resin cured material are exposed. The thermoplastic resin and the fibers contained therein are entangled with the exposed fibers contained in the thermosetting resin cured material, and therefore a high joint strength is achieved between the thermoplastic resin and the thermosetting resin cured material. This is presumed to be the reason why the thermoplastic resin and the thermosetting resin cured material are joined together without using an adhesive or a fastener, such as a rivet, in the resin joined body of the present embodiment.

The method of welding performed in the joining step is not limited to any particular method, and various kinds of known welding methods may be employed. Examples of the welding method employable in the present embodiment include ultrasonic welding, vibration welding, induction welding, high frequency welding, laser welding, thermal welding, and spin welding. Among these, the ultrasonic welding and the vibration welding are preferable.

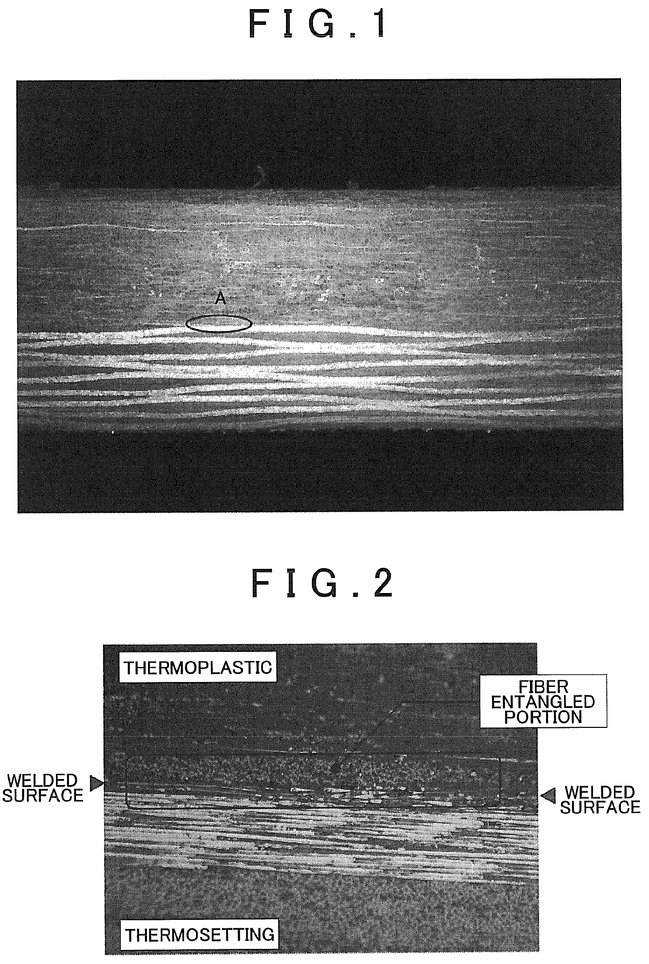

FIG. 1 is an example of a photograph illustrating a sectional image of the joint in the resin joined body of the present embodiment in which woven fabric is used as the fibers contained in the thermosetting resin cured material and non-woven fabric is used as the fibers contained in the thermoplastic resin. In the photograph of FIG. 1 illustrating the sectional image of the joint, an upper portion indicates the thermoplastic resin, and a lower portion indicates the thermosetting resin cured material. In the thermosetting resin cured material disposed on the lower side, a regularly-patterned fiber section peculiar to the woven fabric is observed. FIG. 2 is an enlarged photograph of a portion in FIG. 1 surrounded by an ellipse A and its vicinity. FIG. 2 indicates that a portion where the non-woven fabric contained in the thermoplastic resin (indicated by "THERMOPLASTIC" in FIG. 2) and the woven fabric contained in the thermosetting resin cured material (indicated by "THERMOSETTING" in FIG. 2) are entangled with each other (a fiber entangled portion) is present on a welded surface in FIG. 2.

When the vibration welding is employed as the welding method, the strength of the resin joined body is further enhanced. On the other hand, when the ultrasonic welding is employed as the welding method, it is possible to enhance the degree of flexibility in design and configuration of the thermoplastic resin and the thermosetting resin cured material to be joined together.

In the present embodiment, it is more preferable to employ, as the welding method, the vibration welding in which the thermosetting resin cured material easily disappears by melting or burning during the welding.

In the vibration welding, while a load is applied, by, for example, a press machine, to the thermoplastic resin and the thermosetting resin cured material to be joined together, one of the thermoplastic resin and the thermosetting resin cured material is vibrated in a horizontal direction with respect to the surface of contact between the thermoplastic resin and the thermosetting resin cured material, and frictional heat thus generated is used for the welding.

On the other hand, in the ultrasonic welding, electric energy is converted into vibration energy by an ultrasonic oscillator, and generated frictional heat is used for welding. The frictional heat is generated at the surface of contact between the thermoplastic resin and the thermosetting resin cured material, which are in contact with each other, by applying the thus obtained vibration energy to the surface of contact.

When the vibration welding is employed as the welding method, conditions for the vibration welding may be selected based on, for example, the shapes and the melting temperatures of the thermoplastic resin and the thermosetting resin cured material, and the area of a joint surface. For example, the frequency of the vibration is preferably 100 Hz to 300 Hz, and more preferably 210 Hz to 260 Hz. The load applied to the thermoplastic resin and the thermosetting resin cured material is preferably 0.1 MPa to 5 MPa, more preferably 0.1 MPa to 2MPa, and further preferably 0.1 MPa to 1 MPa. The vibration amplitude is preferably 0.5 mm to 5 mm, more preferably 1 mm to 3 mm, and further preferably 1.5 mm to 2.5 mm.

When the ultrasonic welding is employed as the welding method, conditions for the ultrasonic welding may be selected based on, for example, the shapes and the melting temperatures of the thermoplastic resin and the thermosetting resin cured material, and the area of the joint surface. For example, the horn pressure applied by a horn included in an ultrasonic generator that generates ultrasonic waves is preferably 100 N to 2000 N, more preferably 300 N to 1000 N, and further preferably 500 N to 800 N. The amplitude of the ultrasonic vibration is preferably 10 µm to 100 µm, and more preferably 15 µm to 50 µm. The pressure applied to the thermoplastic resin and the thermosetting resin cured material is preferably 0 kN to 5 kN, more preferably 0 kN to 3 kN, and further preferably 0 kN to 1 kN.

Next, a vehicular structural body will be described. The vehicular structural body of the present embodiment includes the above-described resin joined body of the present embodiment. The kind of the vehicular structural body of the present embodiment is not limited to any particular kind, and examples of the vehicular structural body include a side door, a hood, a roof, a rear door, a luggage compartment door, a bumper, and a crash box.

In the vehicular structural body of the present embodiment, the thermoplastic resin containing the fibers and the thermosetting resin cured material containing the fibers may each be formed into a molded part by a molding method selected depending on the intended use, such as press molding, injection molding or transfer molding, before being joined together by the welding.

In general, the thermosetting resin cured material is superior to the thermoplastic resin in surface smoothness. Therefore, when the resin joined body of the present embodiment is used to form, for example, a door as the vehicular structural body, it is preferable that the thermosetting resin cured material of the resin joined body is used to constitute a surface portion of the door.

When the vehicular structural body of the present embodiment is used, each resin vehicular structural body is formed by a combination of suitable resin materials based on the desired characteristics. Therefore, when the vehicular structural body of the present embodiment is used, a next-generation vehicle in which multiple kinds of resins (i.e., multi-materials) are used is obtained.

Hereinafter, the present embodiment will be more specifically described with reference to examples and comparative examples, but it is noted that the present embodiment is not limited to the following examples.

First, preparation of test pieces will be described. A carbon-fiber-reinforced thermoplastic resin (CFRTP, a composite material of a polyamide resin and carbon fibers (in the form of non-woven fabric), having a melting temperature of 240°C), a carbon-fiber-reinforced thermosetting resin cured material (CFRP, a composite material of an epoxy resin cured material and carbon fibers (in the form of woven fabric), having a melting temperature of 140°C), an aluminum plate (having an untreated surface), an aluminum plate (having a surface sanded with #60 sandpaper), and an iron plate (having a surface coated by cationic electrodeposition) were used as test pieces. With respect to the CFRP, a mold-facing surface and a film-facing surface of a prepreg obtained by thermally curing the resin were distinctively used. The size of each test piece was 175 mm in length, 25 mm in width, and 3 mm in thickness. The test piece was prepared by cutting each material into the above-described size by using a grinding machine. The mold-facing surface and the film-facing surface of the CFRP, the surfaces of the aluminum plates and the surface of the CFRTP were subjected to a degreasing treatment. Each test piece was stored for 10 or more days in a room where the temperature was controlled to 25 ± 2°C before use in a welding test.

Next, vibration welding will be described. As a vibration welding machine, Branson MICROPPL (Emerson Japan, Ltd.) was used. On a workpiece (on a fixed side) and a workpiece (on a vibrated side), the above-described test pieces were attached in combinations shown in Table 1, and the vibration welding was carried out to produce resin joined bodies. As the welding conditions, the vibration amplitude was set to 1.8 mm, the pressure was set to 0.75 MPa, and a weld depth was set to 0.3 mm.

Next, measurement of shear strength will be described. A shear test was carried out by using Autograph AG-X100KN manufactured by Shimadzu Corporation. Results thus obtained are shown in Table 1. It is noted that each of the obtained results is shown as an average value of results of the test performed twice.

**Table 1**

| Fixed side | CFRTP | | | | | CFRP | CFRTP |
|---|---|---|---|---|---|---|---|
| Vibrated side | CFRP | | AL | | Fe | CFRP | CFRTP |
| Surface state/treatme nt | Mold-facin g surface | Film-facing surface | Base | Sanded with #60 sandpaper | Cationic ED | Mold-facin g surface | - |
| Shear strength (MPa) | 19.5 | 15.7 | - | - | 4.4 | - | 26.0 |

In Table 1, a symbol "-" shown in the row of "Shear strength" means that the shear strength was below the measurement limit.

It is understood from Table 1 that a joined state is achieved by the welding between the CFRTP and the CFRP. Further, the shear strength is 19.5 MPa, which is substantially equivalent to that achieved by welding CFRTPs to each other (26.0 MPa). When a fracture surface of the joint formed between the CFRTP and the CFRP was observed, the carbon fibers contained in the CFRP adhered to the CFRTP. It is presumed based on this fact, that the epoxy resin cured material of the CFRP was broken when heat was generated by the vibration, and the thermoplastic resin flowed into a portion where the epoxy resin cured material had been removed, so that the carbon fibers contained in the CFRP were joined to the CFRTP. It is noted that the shear strength was different between the mold-facing surface of the CFRP and the film-facing surface thereof. Because a difference in the irregularities between the mold-facing surface and the film-facing surface is merely about 10 µm, it is considered that the surface irregularities have little influence on the shear strength in this evaluation. Because the kind of a mold release agent used is different between the mold-facing surface and the film-facing surface, it is considered that the mold release agent remaining in a large amount on the film-facing surface (degreased before the welding) has a strong influence. This is presumed to be the reason why the shear strength was largely varied (to be 17.3 MPa and 14.0 MPa) on the film-facing surface. On the other hand, when the aluminum plates and the iron plate were used as the test pieces, almost no joining effect was observed. The reason for this is considered to be as follows. Due to the principle of the vibration welding, test pieces are welded to each other by heat generated through friction between contact surfaces of the test pieces, but even when irregularities are provided on a surface of a metal, the irregularities are merely rubbed out, and hence, it is difficult to join the metal to a thermoplastic resin unless the contact surface of the metal is coated with a resin or the like. When a resin film having an extremely small thickness, such as a resin film formed by the cationic electrodeposition or the like, is used, the resin film is highly possibly peeled off through the vibration welding. Thus, it is considered that a resin film having a certain degree of thickness should be formed on a surface of a metal in order to achieve sufficient shear strength.

Next, ultrasonic welding will be described. As an ultrasonic welding machine, Branson 2000Xdt (Japan Emerson, Ltd.) was used. The conditions for the welding performed by using the ultrasonic welding machine were set as shown in Table 2, and an ultrasonic welding test was carried out to produce a resin joined body. The shear strength of each test piece resulting from the ultrasonic welding was measured in the same manner as in the test for the vibration welding. Results thus obtained are shown in Table 2. As the test pieces, the CFRTP and the CFRP were used.

**Table 2**

| | Welding conditions | | | | Measurement results | | |
|---|---|---|---|---|---|---|---|
| | Amplitude (µm) | Horn pressure (N) | Test piece pressure (kN) | Weld penetration depth (mm) | Test force (kN]) | Shear strength¹⁾ (MPa) | Shear strength²⁾ (MPa) |
| Reference | 25 | 650 | - | 9.0 | 8.75 | 49.54 | 23.03 |
| 1 | 25 | 650 | 1.00 | 9.0 | 5.72 | 32.40 | 22.50 |
| 2 | 25 | 650 | 0.50 | 9.0 | 3.79 | 21.47 | 13.38 |
| 3 | 25 | 650 | 2.00 | 9.0 | 4.26 | 24.10 | 17.71 |
| 4 | 28 | 650 | - | 9.0 | 5.58 | 31.60 | 14.69 |
| 5 | 22 | 650 | - | 9.0 | 2.44 | 13.80 | 21.56 |

In Table 2, "Shear strength¹⁾" signifies a strength calculated with a horn diameter set to φ15, and "Shear strength²⁾" signifies a strength calculated based on an actual welded area.

Table 2 indicates that the highest strength (of about 50 MPa) was achieved under the reference welding conditions. In other words, the strength was not improved even when the test pieces were pressed (i.e., by pressurization of the test pieces). The lower the test piece pressure was, the higher the shear strength was. The reason for this is considered to be as follows. Because test pieces are vibrated through movement vertical to contact surfaces of the test pieces in the ultrasonic welding, if the test pieces are pressed against each other too strongly, the entanglement between the fibers contained in the test pieces becomes insufficient. Further, the welding strength was largely varied (different) when the amplitude was increased or decreased by approximately 3 µm (corresponding to approximately 5% in terms of control).

## Claims

1. A resin joined body **characterized by** comprising:
a thermoplastic resin containing fibers; and
a thermosetting resin cured material containing fibers, the thermosetting resin cured material having a melting temperature lower than a melting temperature of the thermoplastic resin, wherein
the thermoplastic resin and the thermosetting resin cured material are joined together by welding.

2. The resin joined body according to claim 1, **characterized in that** the fibers contained in the thermosetting resin cured material are in a form of woven fabric.

3. The resin joined body according to claim 1 or 2, **characterized in that** the fibers contained in the thermoplastic resin are in a form of non-woven fabric.

4. The resin joined body according to any one of claims 1 to 3, **characterized in that** a difference between the melting temperature of the thermoplastic resin and the melting temperature of the thermosetting resin cured material is 50°C or more.

5. A vehicular structural body comprising the resin joined body according to any one of claims 1 to 4.

6. A method of producing a resin joined body, the method **characterized by** comprising
joining a thermoplastic resin and a thermosetting resin cured material together by welding,
the thermoplastic resin containing fibers,
the thermosetting resin cured material containing fibers, and the thermosetting resin cured material having a melting temperature lower than a melting temperature of the thermoplastic resin.

7. The method according to claim 6, **characterized in that** the welding is vibration welding.
